# EUROPÄISCHE PATENTSCHRIFT

(11) **EP 1 236 058 B1**
(45) Veröffentlichungstag und Bekanntmachung des Hinweises auf die Patenterteilung: **31.08.2005**
(21) Anmeldenummer: 00943458.0
(22) Anmeldetag: 05.07.2000
(51) Int. Cl.: G02B 5/08, H01S 3/08

(54) **MEHRSCHICHTIGER SPIEGEL**
MULTILAYER MIRROR
MIROIR A PLUSIEURS COUCHES

(30) Priorität: 09.12.1999 AT 206699
(43) Veröffentlichungstag der Anmeldung: 04.09.2002
(73) Patentinhaber: Femtolasers Produktions GmbH, 2100 Korneuburg (AT)
(72) Erfinder: KRAUSZ, Ferenc, A-2331 Vösendorf (AT); TEMPEA, Gabriel, Florin, A-1150 Wien (AT)
(74) Vertreter: Weinzinger, Arnulf
(86) Internationale Anmeldenummer: PCT/AT2000/000183
(87) Internationale Veröffentlichungsnummer: WO 2001/042821

(56) Entgegenhaltungen:
- EP-A- 0 416 105
- EP-A- 0 533 362
- WO-A-99/60675
- DE-A- 3 026 370
- US-A- 3 965 439
- US-A- 4 969 175

## Beschreibung

Die Erfindung betrifft einen mehrschichtigen Spiegel gemäß dem einleizenden Teil von Anspruch 1.

In der Lasertechnik werden zunehmend kürzere Laserimpulse, mit Impulsdauern im Pikosekunden- und Femtosekunden-Bereich (bis unter 10 Femtosekunden), angewandt. Abgesehen von der Anwendung in wissenschaftlichen Bereichen werden derartige Kurzpuls-Laservorrichtungen immer häufiger auch z.B. für Materialbearbeitungen höchster Präzision, in der ultraschnellen Spektroskopie, in der optischen Breitband-Nachrichtenübertragung und in der Femtochemie eingesetzt. Die bei solchen Kurzpuls-Laservorrichtungen, vgl. beispielsweise WO 98/10494 A, eingesetzten Laserkristalle haben ausgezeichnete thermische Eigenschaften sowie breite Fluoreszenzbänder, um die Erzeugung von Laserimpulsen mit Impulsdauern unter 10 oder sogar unter 5 Femtosekunden zu ermöglichen. Insbesondere werden hier Laserkristalle eingesetzt, die mit Übergangsmetallen dotiert sind, wie v.a. der Titan-Saphir(Ti:S)-Laserkristall.

Ein Problem bei der Erzeugung derartiger ultrakurzer Laserimpulse liegt in den übrigen optischen Komponenten des jeweiligen Lasersystems, wobei es insbesondere von Bedeutung wäre, breitbandige dispersive Komponenten zur Verfügung zu haben.

Es ist bereits vorgeschlagen worden, dispersive Spiegel für Laservorrichtungen in Dünnschicht-Technik auszuführen, vgl. z.B. die US 5 734 503 A. Dabei werden die Spiegel aus einer Vielzahl von Einzelschichten aufgebaut, die unterschiedliche Eigenschaften aufweisen, nämlich abwechselnd einen höheren bzw. einen niedrigeren Brechungsindex besitzen, und die bei der Reflexion eines ultrakurzen Laserimpulses - der eine entsprechend große Bandbreite im Frequenzbereich aufweist - ihre Funktion ausüben: Die verschiedenen Wellenlängenkomponenten des Laserstrahls dringen unterschiedlich tief in die Einzelschichten des Spiegels ein, bevor sie reflektiert werden. Dadurch werden die verschiedenen Frequenzkomponenten verschieden lang, entsprechend der jeweiligen Eindringtiefe, verzögert; wenn eine negative Gruppenverzögerungsdispersion erzielt werden muss, werden die kurzwelligen Wellenpakete weiter außen reflektiert; die langwelligen Anteile dringen hingegen tiefer in den Spiegel ein, bevor sie reflektiert werden. Dies bedeutet, dass die langwelligen Frequenzkomponenten gegenüber den kurzwelligen Komponenten zeitlich verzögert werden. Auf diese Weise kann bei einer Laservorrichtung eine Dispersionskompensation für einen Kurzpuls-Laserstrahl erhalten werden. Im Zeitbereich besonders kurze Impulse besitzen nämlich ein breites Frequenzspektrum, wobei aber die verschiedenen Frequenzkomponenten des Laserstrahls vor allem in einem dichten Propagationsmedium (wie z.B. in einem Laserkristall) oder auch in Luft einen unterschiedlichen Brechungsindex "sehen" (d.h. die optische Dicke des Propagationsmediums ist für die verschiedenen Frequenzkomponenten der Laserimpulse verschieden groß); die verschiedenen Frequenzkomponenten des Laserimpulses werden daher beim Durchlaufen des Propagationsmediums verschieden verzögert. Diesem Effekt soll durch die genannte Dispersionskompensation an den bekannten dispersiven Dünnschicht-Laserspiegeln begegnet werden, an denen eine negative Gruppenverzögerungsdispersion (GDD - group delay dispersion) bewirkt wird. Diese bekannten Spiegel werden auch als "gechirpte" Spiegel (Chirped Mirrors - CM) bezeichnet und stellen einen wesentlichen Fortschritt im Vergleich zu davor eingesetzten Verzögerungselementen mit Prismen dar. Es konnten erstmals Laserimpulse mit Impulsdauern von 10 Femtosekunden und darunter direkt von einem Laseroszillator erhalten werden, und die Lasersysteme wurden kompakter und verlässlicher. Die CM-Spiegel steuern die Wellenlängen-Abhängigkeit der Gruppenverzögerung wie erwähnt durch die Eindringtiefe der verschiedenen spektralen Komponenten in der Vielschichtstruktur.

Ein Problem bei diesen CM-Spiegeln und ganz allgemein bei vergleichbaren Mehrschicht-Spiegeln besteht darin, dass an der Grenzfläche der obersten Schicht zur Umgebung, also an der Vorderfläche, wo die Strahlung auftrifft, eine weitgehend von der Wellenlänge unabhängige Reflexion (z.B. in der Größenordnung von 3%) auftritt. In der Folge kommt es zu Interferenzen zwischen Strahlen, die an dieser Vorderfläche reflektiert werden, und Strahlen, die tiefer in der Mehrschichtstruktur des Spiegels reflektiert werden, wobei diese Interferenzeffekte zu einer Verzerrung des Reflexionsvermögens und vor allem zu einer starken Verzerrung der Phasencharakteristik des Spiegels führen können. Um diesem Effekt zumindest teilweise entgegenzuwirken, wurde bereits vorgeschlagen (vgl. F.X. Kärntner, N. Matuscheck, T. Tschibili, U. Keller, H.A. Haus, C. Heine, R. Morf, V. Scheuer, M. Tilsch, T. Tschudi, "Design and fabrication of double-chirped mirrors" 1997 Opt. Lett 22, 831; bzw. G. Tempea, F. Krausz, Ch. Spielmann, K. Ferencz, "Dispersion control over 150 THz with chirped dielectric mirrors", 1998, IEEE JSTQE 4, 193), eine antireflektierende Beschichtung oder ein schmalbandiges Sperrfilter an der Vorderfläche, d.h. der Grenzfläche zur Umgebung (in der Regel Luft), anzubringen, Um Störresonanzen wirksam zu unterdrücken, sollte die Reflexion an der Vorderfläche in der Größenordnung von bloß 10⁻⁴ liegen. Antireflexionsschichten und Sperrfilter können eine solche Eigenschaft jedoch nur über eine sehr begrenzte Bandbreite annähern. Demzufolge konnten dispersive Spiegel in der Vergangenheit bei 800 nm-Strahlung nur über Bandbreiten von 150-160 THz betrieben werden. Weiters ist eine totale Unterdrückung der Resonanz-Interferenzeffekte nicht einmal über eine solche Bandbreite möglich, und die Dispersionskurve zeigt oft starke Schwankungen.

Es ist daher Aufgabe der Erfindung, hier Abhilfe zu schaffen und einen mehrschichtigen Spiegel der eingangs angeführten Art vorzusehen, bei dem die genannten, aufgrund von an der Vorderfläche des Spiegels reflektierter Strahlung auftretenden Interferenzeffekte auf einfache Weise vermieden werden.

Der erfindungsgemäße mehrschichtige Spiegel der eingangs angeführten Art ist dadurch gekennzeichnet, dass die Vorderfläche relativ zu den Grenzflächen zwischen den Einzelschichten geneigt ist. Durch diese Schrägstellung der Vorderfläche der Mehrschichtstruktur des Spiegels, also z.B. der vordersten Grenzfläche des Spiegels, beispielsweise zwischen Dielektrikum (Spiegel) und Luft (Umgebung), wird erreicht, dass der an dieser Vorderfläche reflektierte Strahl nicht-kolinear mit den an den übrigen Grenzschichten der Spiegel-Mehrschichtsstruktur reflektierten Strahlkomponenten ist, d.h. seine Achse verläuft unter einem entsprechenden Winkel zur Achse der übrigen Strahlkomponenten; dadurch kommt es (in einem entsprechenden Abstand vom Spiegel, abhängig auch vom Strahldurchmesser) zu keiner Strahlüberlappung bzw. zu keiner Interferenz mehr, so dass die vorbeschriebenen störenden Interferenzeffekte vermieden werden und z.B. eine breitbandige Dispersionskompensation möglich ist.

Der Winkel, um den die Vorderfläche relativ zu den übrigen Grenzflächen der Spiegel-Mehrschichtstruktur "gekippt" wird, ist an sich innerhalb relativ weiter Grenzen wählbar, wird jedoch in der Regel möglichst klein gehalten und z.B. im Bereich von 1° oder einiger weniger Grad liegen. Derartige kleine Winkel sind einerseits bei der Spiegelherstellung leicht realisierbar, und bei einem Durchmesser des einfallenden Strahls von z.B. 2 mm ist andererseits der reflektierte Nutz-Bündelstrahl, der von den inneren Grenzschichten der Mehrschichtstruktur reflektiert wird, vom an der schrägen Vorderfläche schräg reflektierten Strahl nach einer Propagationrlänge von knapp 6 cm bereits völlig getrennt, d.h. phasenstörende Interferenzeffekte (die hier die Untergrenze für den Winkel definieren) können ab dieser Distanz nicht mehr auftreten. Kleine Winkel (im Bereich von 1° oder einiger weniger Grad) haben überdies den Vorteil, dass die Dicke der ersten, äußersten Schicht des Spiegels - deren Außenfläche die schräge Vorderfläche bildet - auch gering gehalten werden kann, was deshalb vorteilhaft ist, weil dann die von der keilförmigen ersten, äußeren Schicht eingeführte positive Dispersion 2. Ordnung minimiert werden kann (um gegebenenfalls eine negative Gesamtdispersion des Spiegels zu erzielen).

Es kann aber in bestimmten Fällen durchaus erwünscht sein, einen größeren "Keil"winkel für die äußere Schicht vorzusehen, etwa um eine zusätzliche negative Dispersion - ähnlich wie in einer Anordnung mit einem Prismenpaar - einzuführen.

Der Aufbau des mehrschichtigen Spiegels kann je nach Anwendung mit einem bestimmten Substrat und den darauf niedergeschlagenen Dünnfilm-Einzelschichten in der entsprechenden Anzahl und aus den jeweiligen Materialien vorgesehen werden. Dabei ist es vielfach möglich und für eine einfache Erzielung der Keilform der äußersten Schicht des Spiegels vorteilhaft, wenn die geneigte Vorderfläche durch die Außenfläche eines keilförmigen transparenten Substrats vorgesehen ist, auf dessen Rückseite die Schichten angebracht sind. Bei dieser Ausführungsform wird somit ein vorgefertigtes dünnes transparentes keilförmiges Glas-Substrat eingesetzt, auf dessen von der Vorderfläche abgewandten Rückseite die gewünschten Dünnfilm-Schichten - in an sich üblicher Weise - angebracht werden; beispielsweise werden abwechselnd Schichten mit relativ niedrigem Brechungsindex und solche mit relativ hohem Brechungsindex angebracht. Im Betrieb trifft der einfallende Strahl zuerst auf das keilförmige Glas-Substrat, wobei der an der schrägen Vorderfläche reflektierte Strahl schräg zurückreflektiert wird, und es kommt ferner zu den erwünschten beschriebenen Reflexionen im Inneren des Spiegels, je nach Wellenlänge der Strahlkomponenten, wobei die reflektierten Strahlkomponenten mit dem außen an der Vorderfläche schräg reflektierten Strahl nicht interferieren.

Bei dieser Ausbildung hat sich jedoch gezeigt, dass das keilförmige Substrat, das dünn ist, wegen der in der Beschichtung entstehenden Spannungen wellig werden kann; dadurch wird die Oberflächenqualität beeinträchtigt. Eine andere, besonders vorteilhafte Möglichkeit für die Erzielung der schrägen Vorderfläche oder Außenfläche des Mehrschicht-Spiegels besteht daher darin, dass die geneigte Vorderfläche durch die Außenfläche einer äußeren Schicht mit sich linear ändernder Dicke vorgesehen ist, die zusammen mit den anderen Schichten auf einem von der Strahlauftreffseite abgewandten Substrat angebracht ist. Bei diesem Spiegel-Aufbau bildet somit das Substrat, das planparallel und dick sein kann, die Rückseite des Spiegels, und auf diesem Substrat werden in an sich herkömmlicher Weise die Einzelschichten aufgebracht. Um eine äußere Schicht mit Keilform zu erzielen, d.h. die sich linear ändernde Dicke der Schicht vorzusehen, kann bei der Herstellung dieser Schicht in Form einer Dünnfilm-Schicht das Substrat in der Beschichtungskammer etwas schräggestellt werden, oder es kann eine entsprechend in der Durchlässigkeit linear variierende Maske bei der Aufbringung des Materials für die äußerste Schicht verwendet werden. In beiden Fällen wird die bereits zuvor erhaltene Struktur für die Herstellung der äußeren Schicht einem inhomogenen Dampfstrom ausgesetzt, wobei die Dicke der äußersten (obersten) Schicht monoton mit wachsendem Abstand von der Dampfquelle abnehmen wird.

Eine andere, vorteilhafte, einfach herzustellende Ausführungsform zeichnet sich dadurch aus, dass die äußere Schicht durch ein keilförmiges Glasplättchen gebildet ist. Um Reflexionen an der Grenzfläche Beschichtung/Glasplättchen zu vermeiden, kann das Glasplättchen über ein Index-Anpassungsfluid, einen optischen Kleber oder einen optischen Zement an der Beschichtung angebracht werden.

Der an der Vorderfläche der Mehrschichtstruktur des Spiegels schräg reflektierte Strahl ist wie bereits angedeutet an sich ein Strahl relativ niedriger Intensität, nichtsdestoweniger führt er einen Verlust ein, der zu den Verlusten des Spiegels beiträgt. Um eine Minimierung der Spiegel-Verluste zu erzielen, ist es daher von Vorteil, wenn auf der geneigten Vorderfläche eine antireflektierende Beschichtung mit entsprechend geneigter Vorderfläche aufgebracht ist. Antireflektierende, insbesondere mehrschichtige Beschichtungen sind an sich bekannt, wobei auch antireflektierende Überzüge bekannt sind, die keine Phasenverzerrungen einführen. Untersuchungen haben gezeigt, dass das Reflexionsvermögen an der schrägen Vorderfläche auf diese Weise auf unter 0,2% im Wellenlängenbereich von 500 bis 1000 nm reduziert werden kann. Der Vollständigkeit halber sei erwähnt; dass diese AR(= Antireflexion)-Beschichtung aus zu den übrigen Grenzflächen im Inneren der Spiegel-Mehrschichtstruktur schräg verlaufenden Schichten besteht, entsprechend dem schrägen Verlauf der Vorderfläche des eigentlichen Spiegels. Als Schichten für die AR-Beschichtung können beispielsweise TiO₂ und SiO₂ bzw. Ta₂O₅ und SiO₂ verwendet werden.

Es hat sich als zweckmäßig erwiesen, wenn die Dicken der Einzelschichten mit dem Abstand vom Substrat zur Erzielung einer vorbestimmten Reflexionscharakteristik und bzw. oder einer vorbestimmten Gruppenverzögerungsdispersions-Charakteristik variieren. Durch die angegebene Schichtdicken-Variation kann je nach Einsatzzweck des Spiegels eine bestimmte Soll-Kurve betreffend Reflexionsvermögen bzw. Dispersion (Gruppenverzögerungsdispersion) festgelegt werden, wobei beispielsweise die Einführung einer negativen Gruppenverzögerungsdispersion ebenso wie das Vorsehen einer vorgegebenen positiven Gruppenverzögerungsdispersion denkbar ist. Insbesondere ist es hier vorteilhaft, wenn die Dicken der Einzelschichten mit dem Abstand von der Vorderfläche im Allgemeinen zunehmen, um eine negative, gegebenenfalls konstante Gruppenverzögerungsdispersion und ein hohes Reflexionsvermögen in einem vorgegebenen spektralen Bereich vorzusehen.

Der vorliegende mehrschichtige dispersive Spiegel kann eine "gechirpte" Struktur (vgl. US 5 734 503 A) aufweisen, bei der die Schichtdicken im Schnitt mit dem Abstand von der vordersten Schicht zunehmen, es kann jedoch auch eine resonante Struktur vorliegen, wie sie beispielsweise in der nicht vorveröffentlichten WO 01/05000 A geoffenbart ist. Für den Aufbau der Mehrschichtstruktur des vorliegenden Spiegels können als Einzelschichten in an sich bekannter Weise abwechselnd SiO₂-Schichten und TiO₂-Schichten vorgesehen sein; im Hinblick auf eine preiswerte und zuverlässige Herstellung ist es aber auch denkbar, dass als Einzelschichten abwechselnd SiO₂-Schichten und Ta₂O₅-Schichten vorgesehen sind. Eine derartige Schichtenstruktur mit Ta₂O₅-Schichten ist auch deshalb vorteilhaft, weil die Absorptionskante von Ta₂O₅ bei relativ kurzen Wellenlängen liegt, wodurch die Zerstörschwelle des Materials höher liegt.

Eine andere vorteilhafte Ausführungsform des vorliegenden Spiegels wird erhalten, wenn als Einzelschichten abwechselnd Halbleiterschichten mit niedrigerem Brechungsindex und Halbleiterschichten mit höherem Brechungsindex vorgesehen sind. Ein Vorteil einer solchen Halbleiter-Ausführung besteht darin, dass es dann möglich ist, in der Mehrschichtstruktur des Spiegels (an sich bekannte) sättigbare Absorber-Schichten einzufügen, was für die Anwendung in Laservorrichtungen von besonderem Vorteil sein kann.

Der erfindungsgemäße Spiegel wird in besonders vorteilhafter Weise in einer Laservorrichtung, insbesondere in einer Kurzpuls-Laservorrichtung, verwendet, und zwar insbesondere als Element zur Dispersionskontrolle, wie eingangs erläutert wurde.

Die Erfindung wird nachstehend anhand von besonders bevorzugten Ausführungsbeispielen, auf die sie jedoch nicht beschränkt sein soll, und unter Bezugnahme auf die beiliegenden Zeichnungen noch näher erläutert. Es zeigen im Einzelnen in der Zeichnung:
Fig.1 schematisch den Aufbau eines dispersiven mehrschichtigen Spiegels mit einem keilförmigen vorderen Glas-Substrat;
Fig.2 in einer entsprechenden schematischen Ansicht einen anderen mehrschichtigen dispersiven Spiegel, bei dem ein rückseitiges, je nach Einsatzzweck zu wählendes Substrat als Basis für den Schichtaufbau vorgesehen ist;
Fig.3 eine Anordnung mit zwei dispersiven Spiegeln beispielsweise gemäß Fig.1 (oder aber auch gemäß Fig.2) für die Kompensation einer räumlichen Dispersion (Winkeldispersion);
Fig.4 in einem Diagramm das Reflexionsvermögen R eines Spiegels gemäß Fig.1 oder Fig.2 in Abhängigkeit von der Wellenlänge λ;
Fig.5 in einem Diagramm die Gruppenverzögerungsdisperion GDD des Spiegels gemäß Fig.1 oder 2 über der Wellenlänge λ;
die Fig.6 und 7 in entsprechenden Diagrammen das Reflexionsvermögen R (Fig.6) bzw. die Gruppenverzögerungsdispersion GDD (Fig.7) über der Wellenlänge λ für einen anderen Spiegel gemäß Fig.1 oder 2, der dank seiner hohen Transmission im Bereich der Pump-Wellenlänge als Einkopplungsspiegel in einem Laser-Resonator verwendet werden kann; und
Fig.8 eine besonders bevorzugte Ausführungsform eines dispersiven Spiegels, der ähnlich jenem von Fig.2 mit einem rückseitigen Substrat ausgebildet ist.

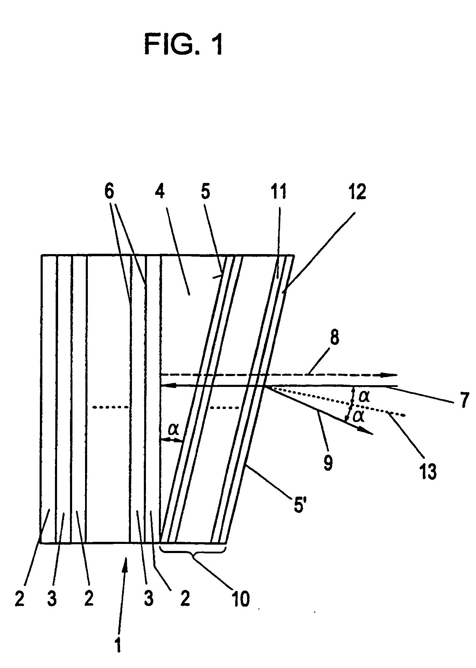

In Fig.1 ist schematisch ein mehrschichtiger dispersiver Spiegel 1 veranschaulicht, der beispielsweise aus Einzelschichten 2 mit relativ niedrigem Brechungsindex und Einzelschichten 3 mit relativ hohem Brechungsindex aufgebaut ist. Diese Einzelschichten 2, 3 sind abwechselnd angeordnet, wobei insgesamt z.B. 30 Einzelschichten 2, 3 oder mehr vorhanden sein können. Diese Einzelschichten 2, 3 sind an der Rückseite eines keilförmigen dünnen transparenten Substrats 4, insbesondere eines Glas-Substrats, in an sich herkömmlicher Weise, beispielsweise durch Niederschlagen aus der Dampfphase, aufgebracht. Das Substrat 4 hat wie ersichtlich Keilform, d.h. seine Dicke ändert sich linear von einer Seite mit minimaler Dicke zur anderen, gegenüberliegenden Seite mit maximaler Dicke, so dass auf diese Weise eine Vorderfläche 5 erhalten wird, die im Vergleich zu den Grenzflächen 6 zwischen den Einzelschichten 2, 3 unter einem Winkel α geneigt verläuft.

Ein an der Vorderfläche 5 ankommender Strahl 7, insbesondere Laserstrahl, durchdringt das Substrat 4 und wird abhängig von den Wellenlängen seiner einzelnen Frequenzkomponenten mehr oder weniger tief in der Mehrschichtstruktur 2, 3 des Spiegels 1 an den entsprechenden Grenzflächen 6 reflektiert, um so die eingangs beschriebene Dispersionskontrolle für den reflektierten Strahl 8 zu erzielen. In der Regel wird hier eine negative Gruppenverzögerungsdispersion GDD vorgesehen, wobei Wellen mit größeren Wellenlängen zwecks stärkerer Verzögerung tiefer in die Mehrschichtstruktur 2, 3 eindringen als kurzwellige Anteile, die im Spiegel 1 weiter außen reflektiert werden.

Wie sich gezeigt hat, kommt es normalerweise an der Vorderfläche des Spiegels 1 zu einer wenn auch geringen, so doch - ohne schräge Vorderfläche - nachteiligen Reflexion, wobei der hier reflektierte Strahl mit den innerhalb der Mehrschichtstruktur 2, 3 des Spiegels 1 reflektierten Strahlen Interferenzen bewirkt, woraus starke Verzerrungen des Reflexionsvermögens und der Phasencharakteristik des Spiegels resultieren. Um diese Interferenz-Effekte zu vermeiden, ist wie erwähnt die Vorderfläche 5 relativ zu den übrigen Grenzflächen 6 schräg angeordnet, so dass der an der Vorderseite 5 bzw. 5' des Spiegels 1 reflektierte Strahl 9 unter einem Winkel gleich dem doppelten Neigungswinkel α der Vorderfläche 5 bzw. 5' reflektiert wird. Dadurch ist dieser schräg reflektierte Strahl 9 zumindest in einem relativ kurzen Abstand bereits kein Störfaktor, da er je nach Neigungswinkel der Vorderfläche 5 bzw. 5' sowie je nach Durchmesser des einfallenden Strahls 7 bereits nach einer relativ kurzen Propagationslänge, im Bereich von einigen wenigen Zentimetern, völlig von den Nutz-Strahlen 7 und 8 getrennt ist, so dass ab dieser Distanz phasenstörende Interferenzeffekte nicht mehr auftreten können.

Da der schräg reflektierte Strahl 9 zu den Verlusten des Spiegels 1 beiträgt, wird bevorzugt an der Vorderfläche 5 der keilförmigen Schicht 4 - die hier das Substrat für die Schichten 2, 3 bildet - eine anti-reflektierende (AR-Antireflexions-) Beschichtung 10 aufgebracht, die aus mehreren Einzelschichten 11, 12 von abwechselnd schwächer brechenden Schichten 11 bzw. stärker brechenden Schichten 12 angebracht wird. Für diese AR-Beschichtung können beispielsweise abwechselnd TiO₂ und SiO₂-Schichten oder aber Ta₂O₅- und SiO₂-Schichten in an sich herkömmlicher Weise verwendet werden, wobei in der Regel weniger als 15 Schichten ausreichen und durch diese AR-Beschichtung 10 keine Phasenverzerrungen eingeführt werden. Mit einer derartigen AR-Beschichtung 10 ist es möglich, das Reflexionsvermögen an der nunmehr äußeren Vorderfläche 5' (Grenzfläche vom Spiegel 1 zur Umgebung) im interessanten Wellenlängenbereich von 500 nm bis 1000 nm auf unter 0,2% herabzusetzen.

Der Vollständigkeit halber ist in Fig.1 weiters die Flächennormale 13 veranschaulicht, die senkrecht auf die Vorderfläche 5' steht und die Winkelsymmetrale zwischen dem einfallenden Strahl 7 und dem an der Vorderfläche 5' schräg reflektierten Strahl 9 bildet.

Für den Aufbau eines Spiegels 1 gemäß Fig.1 kann beispielsweise die folgende Schichtenstruktur gewählt werden:

| Material keilförmiges Substrat 4 | Schichtdicke (nm) |
|---|---|
| SiO₂ | 259.80 |
| TiO₂ | 15.00 |
| SiO₂ | 61.38 |
| TiO₂ | 59.12 |
| SiO₂ | 18.81 |
| TiO₂ | 79.30 |
| SiO₂ | 72.89 |
| TiO₂ | 21.16 |
| SiO₂ | 118.24 |
| TiO₂ | 56.13 |
| SiO₂ | 30.30 |
| TiO₂ | 75.66 |
| SiO₂ | 96.41 |
| TiO₂ | 33.40 |
| SiO₂ | 76.25 |
| TiO₂ | 76.31 |
| SiO₂ | 80.31 |
| TiO₂ | 35.10 |
| SiO₂ | 108.49 |
| TiO₂ | 73.01 |
| SiO₂ | 72.73 |
| TiO₂ | 48.58 |
| SiO₂ | 102.70 |
| TiO₂ | 76.02 |
| SiO₂ | 95.01 |
| TiO₂ | 42.53 |
| SiO₂ | 100.45 |
| TiO₂ | 97.86 |
| SiO₂ | 100.47 |
| TiO₂ | 50.81 |
| SiO₂ | 93.09 |
| TiO₂ | 82.43 |
| SiO₂ | 132.75 |
| TiO₂ | 76.17 |
| SiO₂ | 84.22 |
| TiO₂ | 69.18 |
| SiO₂ | 148.68 |
| TiO₂ | 78.55 |
| SiO₂ | 117.82 |
| TiO₂ | 79.60 |
| SiO₂ | 154.27 |
| TiO₂ | 78.25 |
| SiO₂ | 116.50 |
| TiO₂ | 109.89 |
| SiO₂ | 143.51 |
| TiO₂ | 89.85 |
| SiO₂ | 158.38 |
| TiO₂ | 76.01 |
| SiO₂ | 174.52 |
| TiO₂ | 86.94 |
| SiO₂ | 186.03 |
| TiO₂ | 96.81 |
| SiO₂ | 167.78 |
| TiO₂ | 106.09 |
| SiO₂ | 191.54 |
| TiO₂ | 120.83 |
| SiO₂ | 187.05 |
| TiO₂ | 122.09 |
| SiO₂ | 307.80 |

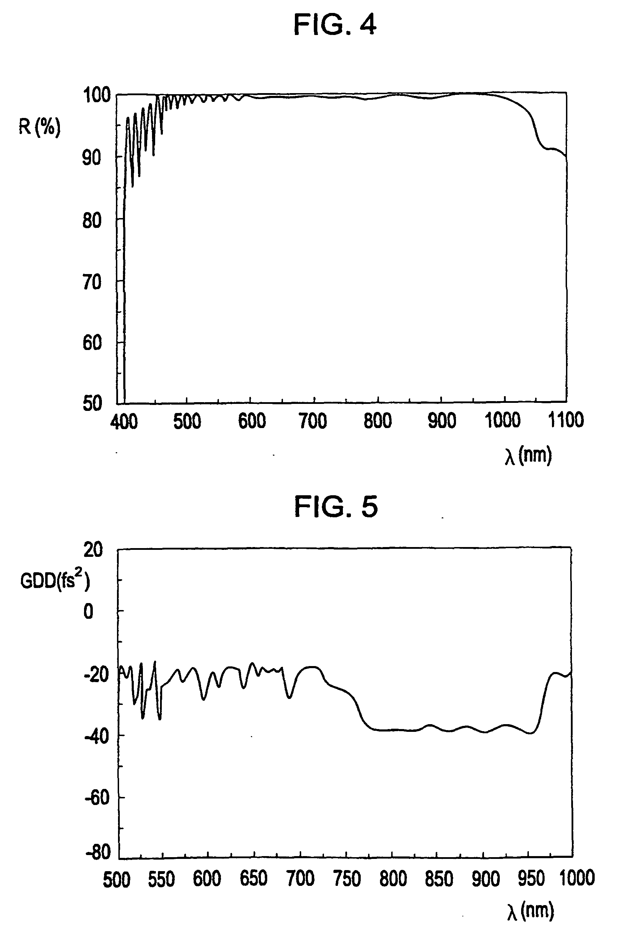

Für einen derartigen Spiegel ist in den Fig.4 und 5 das Reflexionsvermögen R (in %) über der Wellenlänge λ (in nm) bzw. die Gruppenverzögerungsdispersion GDD (in fs²) über der Wellenlänge λ (in nm) veranschaulicht. Wie aus Fig.4 ersichtlich ist das Reflexionsvermögen R im Wellenlängenbereich von 500 nm bis 1000 nm praktisch konstant, und die in Fig.5 gezeigte Gruppenverzögerungsdispersion GDD weist einen leicht welligen Verlauf auf.

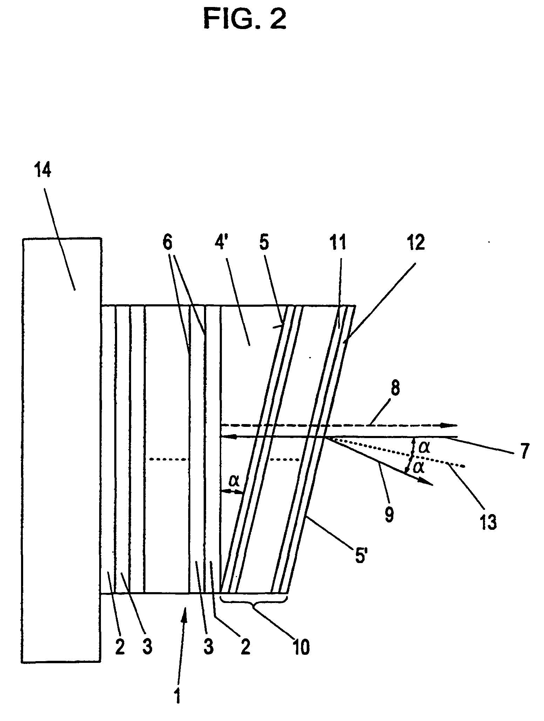

In Fig.2 ist eine andere Ausführungsform eines mehrschichtigen dispersiven Spiegels 1 gezeigt, wobei hier auf einem rückseitigen Substrat 14 wiederum abwechselnd Spiegel-Einzelschichten 2, 3 mit höherem bzw. niedrigerem Brechungsindex in herkömmlicher Weise aufgebracht sind. Eine keilförmige äußere Schicht 4' bildet die vorderste Spiegelschicht, deren Schichtdicke linear, entsprechend dem Winkel α zunimmt, so dass wiederum ihre Vorderfläche 5 relativ zu den Grenzflächen 6 zwischen den übrigen Spiegel-Einzelschichten 2, 3 um den Winkel α geneigt verläuft. Auch hier ist wiederum an der Vorderfläche 5 der äußeren Schicht 4' eine AR-Beschichtung 10 angebracht, die aus abwechselnden Schichten 11 bzw. 12 von niedrigerem bzw. höherem Brechungsindex besteht. Dadurch wird wiederum die Intensität des unerwünschten, an der Vorderfläche 5' der AR-Beschichtung 10 reflektierten Strahls 9 äußerst gering gehalten, so dass die Spiegelverluste minimiert werden.

Die keilförmige äußere Schicht 4' kann beispielsweise dadurch hergestellt werden, dass das Substrat 14 mit den bereits darauf angebrachten Einzelschichten 2, 3 in der Beschichtungskammer entsprechend der gewünschten Schrägstellung gekippt wird, wodurch aufgrund dessen, dass das Substrat damit de facto einem inhomogenen Dampfstrom ausgesetzt wird, die Dicke der Schicht 4' linear mit zunehmendem Abstand von der Dampfquelle abnehmen wird. Eine andere Möglichkeit besteht darin, eine entsprechend inhomogene Maske beim Niederschlagen des Materials für die Schicht 4' aus der Dampfphase zu verwenden, wobei ebenfalls eine linear variierende Schichtdicke für die Schicht 4' erhalten wird.

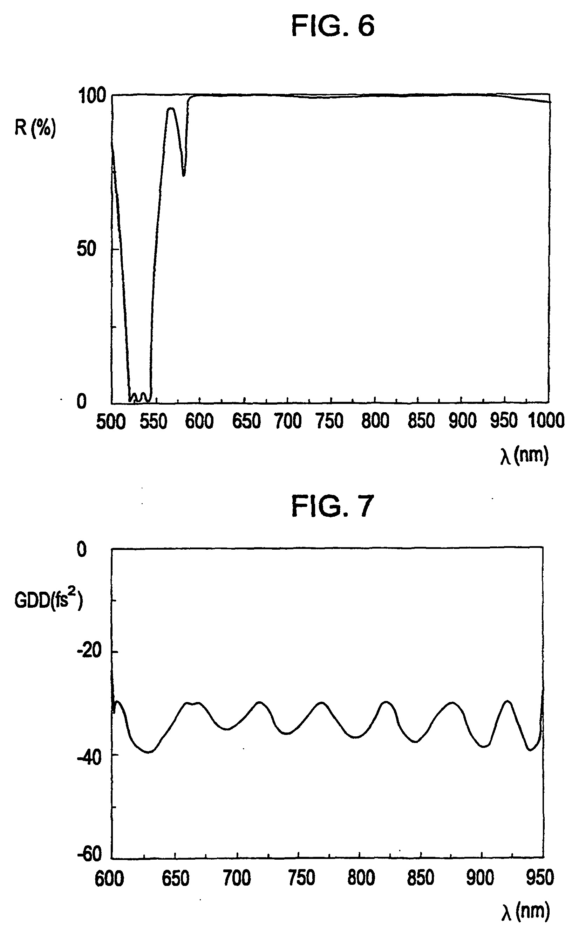

In den Fig.6 und 7 sind zum Spiegel 1 gemäß Fig.2 gehörige Diagramme betreffend Reflexionsvermögen R über der Wellenlänge λ (Fig.6) und Gruppenverzögerungsdispersion GDD über der Wellenlänge λ (Fig.7) gezeigt, wobei die Konstanz des Reflexionsvermögens R im Wellenlängenbereich von ca. 580 nm bis 950 nm, ein leicht wellenförmiger Verlauf der Gruppenverzögerungsdispersion GDD zwischen ca. -30 fs² und -38 fs² im Bereich von 600 nm bis 950 nm sowie eine hohe Durchlässigkeit in der Nähe der Pumpstrahl-Wellenlänge (bei 520 nm bis 540 nm) ersichtlich sind.

In Fig.8 ist eine gegenüber Fig.2 modifizierte Ausführungsform eines mehrschichtigen dispersiven Spiegels 1 gezeigt, bei der wiederum auf einem rückseitigen optischen Substrat 14, das dick und planparallel ist, die Mehrschichtstruktur 2, 3 für die Dispersionskompensation aufgebracht ist. An der Vorderseite dieser Mehrschichtstruktur 2, 3 ist als äußere Schicht ein keilförmiges Glasplättchen 4" angebracht, welches somit wiederum eine schräge Vorderfläche 5 in Bezug auf einen ankomenden Strahl 7 definiert. Der reflektierte Nutzstrahl ist wiederum mit 8 bezeichnet, und der an der Vorderfläche 5 reflektierte unerwünschte Strahl 9, der schräg weg gerichtet ist, um wie beschrieben die Interferenzen mit dem Nutzstrahl zu vermeiden, ist bei 9 angegeben. Das keilförmige Glasplättchen 4" kann wie in den vorhergehenden Ausführungsformen beschrieben mit einer AR-Beschichtung 10 an seiner Vorderfläche 5 versehen sein.

Um eine Reflektivität an der Grenzfläche Mehrschichtstruktur 2, 3/keilförmiges Glasplättchen 4" zu vermeiden, kann eine Index-Anpassungsschicht 16 vorgesehen sein, über die das keilförmige Glasplättchen 4" mit der Merschichtstruktur 2, 3, d.h. mit deren vorderster Einzelschicht 2 oder 3, verbunden ist. Im Einzelnen kann dabei ein Index-Anpassungsfluid verwendet werden, oder aber es wird das Glasplättchen 4" mit Hilfe eines optischen Klebers oder eines optischen Zements befestigt. Beispiele für die Materialien sind: Aliphatische und alicyclische Kohlenwasserstoffe in verschiedenen Konzentrationen als Index-Anpassungsfuide bzw. klare Epoxiharze als optische Zemente bzw. polymerisierbare monomere optische Kleber (vgl. auch US 5 045 397 A)

Die Einzelschichten 2, 3 des Mehrschicht-Spiegels 1 können je nach Anwendungsfall abhängig vom Abstand von der äußeren Schicht 4' (Fig.2 bzw. 8) bzw. vom Substrat 4 (Fig.1) variierende Dicken haben, insbesondere mit diesem Abstand allgemein im Durchschnitt zunehmende Schichtdicken, um so eine negative Gruppenverzögerungsdispersion GDD bzw. eine hohe Reflektivität R in einem bestimmten spektralen Bereich zu erzielen.

Der Spiegel 1 kann ein sog. "gechirpter" Spiegel (CM-Spiegel) sein, es kann sich jedoch auch um eine resonante SchichtenStruktur handeln. Die Einzelschichten 2, 3 können überdies auch an sich herkömmliche Halbleiterschichten sein, um auf diese Weise sättigbare Absorberschichten in der Spiegelstruktur einzubauen.

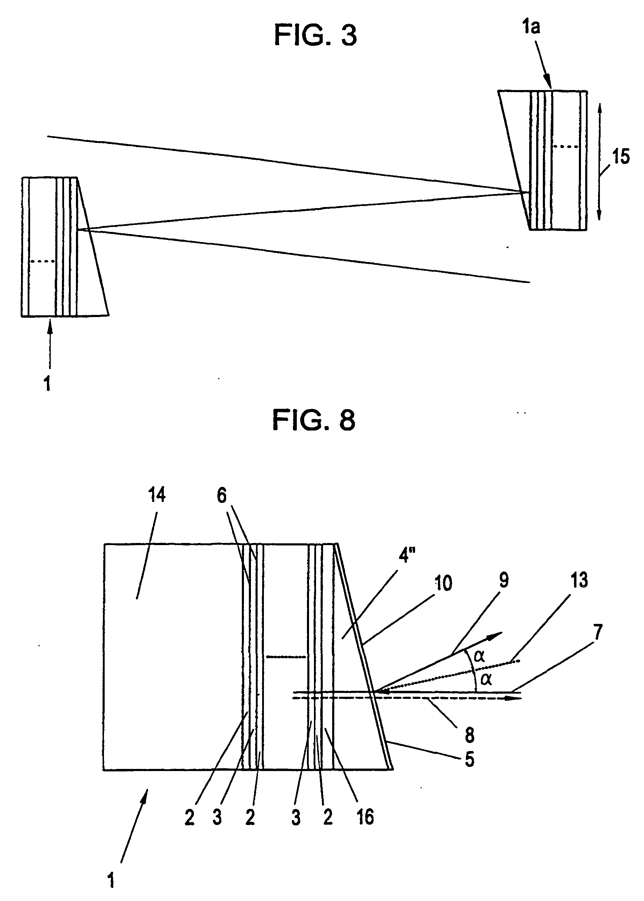

Um eine räumliche (Winkel-)Dispersion zu vermeiden bzw. zu kompensieren, ist es zweckmäßig, Spiegel 1 mit einer geneigten Vorderfläche 5 bzw. 5' wie hier beschrieben paarweise zu verwenden, wie dies aus der Fig.3 ersichtlich ist. Auf diese Weise kann die Winkeldispersion, die von einem Spiegel 1 eingeführt wird, durch den anderen Spiegel, beispielsweise la in Fig.3, kompensiert werden. Überdies erlaubt es eine derartige Anordnung mit Spiegelpaaren 1, la, die Gesamtdispersion exakt abzustimmen, wobei einer der Spiegel, z.B. der Spiegel la, in Querrichtung verstellt wird, wie in Fig.3 mit dem Pfeil 15 schematisch veranschaulicht ist.

Durch die beschriebene Schrägstellung der Vorderfläche 5 bzw. 5' des vorliegenden Mehrschicht-Spiegels 1 wird die Impedanz-Fehlanpassung an der äußersten Grenzfläche (Vorderfläche 5 bzw. 5') vermieden, und die Durchlässigkeit unterhalb des Hochreflexionsbandes des Spiegels wird wesentlich verbessert, da Interferenzbanden höherer Ordnung teilweise unterdrückt werden. Demgemäß kann der vorliegende Spiegel 1 mit schräger Vorderfläche 5 bzw. 5' wie aus den Fig.4 bis 7 ersichtlich ein hohes Reflexionsvermögen R und eine konstante Gruppenverzögerungsdispersion GDD im Wellenlängenbereich von 600 nm bis 950 nm sowie eine hohe Durchlässigkeit in der Nähe der üblichen Pumpstrahl-Wellenlänge (520 nm bis 540 nm) aufweisen. Die Transmission eines Bragg-Spiegels bei der Pumpstrahl-Wellenlänge kann auch durch ein Schrägstellen der vordersten Grenzfläche 6 relativ zu den übrigen Grenzflächen 6 der Schichtstruktur erhöht werden. Der vorliegende Spiegel 1 ist bezüglich Abweichungen von der Nenndicke der Schichten 2, 3, 4, 4', 4", insbesondere der äußeren Schicht 4 bzw. 4' bzw. 4", nicht so empfindlich wie herkömmliche "gechirpte" Spiegel, bei denen bereits relativ geringfügige Herstellungsfehler zu starken Schwankungen insbesondere in der GDD-Kurve führen können.

Die höhere Stabilität der vorliegenden Spiegel 1 wird dadurch erreicht, dass die Impedanz-Anpassung zwischen der eigentlichen Mehrschichtstruktur und der obersten keilförmigen Schicht 4 bzw. 4' bzw. 4" unabhängig von der Schichtstruktur erreicht wird. Statistische Untersuchungen haben gezeigt, dass bei einem herkömmlichen gechirpten Spiegel, der eine Gruppenverzögerungsdispersion von -45 fs, im Bereich von 300 nm bei 800 nm einführt, Schwankungen in der GDD-Kennlinie mit einer maximalen Amplitude von 100% des Zielwertes (bei 800 nm) bei einer durchschnittlichen Abweichung von 0,5 nm von der nominellen Schichtdicke die Folge sind. Unter gleichen Bedingungen beträgt bei einem Spiegel mit geneigter Vorderfläche 5 bzw. 5' die maximale Amplitude der GDD-Schwankungen bei 800 nm nur 30%.

## Patentansprüche

1. Mehrschichtiger Spiegel (1), dessen Schichtaufbau Pulsformung durch Gruppenverzögerungsdispersion bewirkt, mit mehreren, auf einem Substrat (4; 14) angebrachten, über zueinander parallele, ebene Grenzflächen (6) aneinander anschließenden, derart verschiedene optische Eigenschaften und Dicken aufweisenden Einzelschichten (2, 3), dass die verschiedenen Frequenzkomponenten entsprechend ihren unterschiedlich tiefen Eindringtiefen in die Einzelschichten verschieden lang verzögert werden, und mit einer ebenen, strahlauftreffseitigen Vorderfläche (5; 5'), **dadurch gekennzeichnet, dass** die Vorderfläche (5; 5') relativ zu den Grenzflächen (6) zwischen den Einzelschichten (2, 3) geneigt ist.

2. Spiegel nach Anspruch 1, **dadurch gekennzeichnet, dass** die geneigte Vorderfläche (5; 5') durch die Außenfläche einer äußeren Schicht (4') mit sich linear ändernder Dicke vorgesehen ist, die zusammen mit den anderen Einzelschichten (2, 3) auf einem von der Strahlauftreffseite abgewandten Substrat (14) angebracht ist.

3. Spiegel nach Anspruch 2, **dadurch gekennzeichnet, dass** die äußere Schicht durch ein keilförmiges Glasplättchen (4") gebildet ist.

4. Spiegel nach Anspruch 3, **dadurch gekennzeichnet, dass** das keilförmige Glasplättchen (4") über ein Index-Anpassungsfluid auf der vordersten Einzelschicht (2 oder 3) angebracht ist.

5. Spiegel nach Anspruch 3, **dadurch gekennzeichnet, dass** das keilförmige Glasplättchen (4") mit Hilfe eines optischen Klebers auf der vordersten Einzelschicht (2 oder 3) angebracht ist.

6. Spiegel nach Anspruch 3, **dadurch gekennzeichnet, dass** das keilförmige Glasplättchen (4") mit Hilfe eines optischen Zements auf der vordersten Einzelschicht (2 oder 3) angebracht ist.

7. Spiegel nach Anspruch 1, **dadurch gekennzeichnet, dass** die geneigte Vorderfläche (5; 5') durch die Außenfläche eines keilförmigen transparenten Substrats (4) vorgesehen ist, auf dessen Rückseite die Schichten (2, 3) angebracht sind (Fig.1).

8. Spiegel nach einem der Ansprüche 1 bis 7, **dadurch gekennzeichnet, dass** auf der geneigten Vorderfläche (5) eine antireflektierende Beschichtung (10) mit entsprechend geneigter Vorderfläche (5') aufgebracht ist.

9. Spiegel nach einem der Ansprüche 1 bis 8, **dadurch gekennzeichnet, dass** die Dicken der Einzelschichten (2, 3) mit dem Abstand vom Substrat (4; 14) zur Erzielung einer vorbestimmten Reflexionscharakteristik und bzw. oder einer vorbestimmten Gruppenverzögerungsdispersions-Charakteristik variieren.

10. Spiegel nach einem der Ansprüche 1 bis 9, **dadurch gekennzeichnet, dass** die Dicken der Einzelschichten (2, 3) mit dem Abstand von der Vorderfläche (5; 5') im Allgemeinen zunehmen, um eine negative, gegebenenfalls konstante Gruppenverzögerungsdispersion und ein hohes Reflexionsvermögen in einem vorgegebenen spektralen Bereich vorzusehen.

11. Spiegel nach einem der Ansprüche 1 bis 10, **dadurch gekennzeichnet, dass** als Einzelschichten (2, 3) abwechselnd SiO₂-Schichten und TiO₂-Schichten vorgesehen sind.

12. Spiegel nach einem der Ansprüche 1 bis 10, **dadurch gekennzeichnet, dass** als Einzelschichten (2, 3) abwechselnd SiO₂-Schichten und Ta₂O₅-Schichten vorgesehen sind.

13. Spiegel nach einem der Ansprüche 1 bis 10, **dadurch gekennzeichnet, dass** als Einzelschichten (2, 3) abwechselnd Halbleiterschichten mit niedrigerem Brechungsindex und Halbleiterschichten mit höherem Brechungsindex vorgesehen sind.

14. Verwendung eines Spiegels nach einem der Ansprüche 1 bis 13 in einer Laservorrichtung.

15. Verwendung eines Spiegels nach einem der Ansprüche 1 bis 13 in einer Kurzpuls-Laservorrichtung.

## Claims

1. A multilayer mirror (1) whose layer structure causes a pulse formation by group delay dispersion, comprising several individual layers (2, 3) applied to a substrate (4; 14) following each other via parallel, plane interfaces (6), and having such different optical properties and thicknesses that the different frequency components are differently delayed according to their different depths of penetration in the individual layers, and comprising a plane front surface (5; 5') on the side of beam impact, **characterised in that** the front surface (5; 5') is inclined relative to the interfaces (6) between the individual layers (2, 3).

2. A mirror according to claim 1, **characterised in that** the inclined front surface (5; 5') is provided by the outer surface of an outer layer (4') of linearly changing thickness, which, together with the other individual layers (2, 3), is applied to a substrate (14) opposite to from the beam impact side.

3. A mirror according to claim 2, **characterised in that** the outer layer is formed by a wedge-shaped glass platelet (4").

4. A mirror according to claim 3, **characterised in that** the wedge-shaped glass platelet (4") is applied to the most forward individual layer (2 or 3) by means of an index adapting fluid.

5. A mirror according to claim 3, **characterised in that** the wedge-shaped glass platelet (4") is applied to the most forward individual layer (2 or 3) by means of an optical glue.

6. A mirror according to claim 3, **characterised in that** the wedge-shaped glass platelet (4") is applied to the most forward individual layer (2 or 3) by means of an optical cement.

7. A mirror according to claim 1, **characterised in that** the inclined front face (5; 5') is provided by the outer surface of a wedge-shaped transparent substrate (4) on the rear side of which the layers (2, 3) are attached (Fig. 1).

8. A mirror according to any one of claims 1 to 7, **characterised in that** an anti-reflecting coating (10) having an appropriately inclined front surface (5') is applied to the inclined front surface (5).

9. A mirror according to any one of claims 1 to 8, **characterised in that** the thicknesses of the individual layers (2, 3) vary with the distance from the substrate (4; 14) so as to obtain a pre-determined reflection characteristic and/or a pre-determined group delay dispersion characteristic.

10. A mirror according to any one of claims 1 to 9, **characterised in that** the thicknesses of the individual layers (2, 3) increase with the distance from the front surface (5; 5') in general so as to provide a negative, optionally constant, group delay dispersion and a high reflectivity in a pre-determined spectral range.

11. A mirror according to any one of claims 1 to 10, **characterised in that** SiO₂ layers and TiO₂ layers are alternatingly provided as individual layers (2, 3).

12. A mirror according to any one of claims 1 to 10, **characterised in that** SiO₂ layers and Ta₂O₅ layers are alternatingly provided as individual layers (2, 3).

13. A mirror according to any one of claims 1 to 10, **characterised in that** semiconductor layers having a lower refraction index and semiconductor layers having a higher refraction index are alternatingly provided as individual layers (2, 3).

14. The use of a mirror according to any one of claims 1 to 13 in a laser device.

15. The use of a mirror according to any one of claims 1 to 13 in a short-pulse laser device.

## Revendications

1. Miroir à plusieurs couches (1), dont la structure stratifiée provoque une formation d'impulsions par dispersion du retard de groupe, comportant plusieurs couches individuelles appliquées sur un substrat (4; 14), adjacentes les unes aux autres via des interfaces planes parallèles les unes aux autres (6), présentant des propriétés optiques et des épaisseurs assez différentes pour que les différentes composantes de fréquence soient retardées plus ou moins longtemps en fonction de leurs différentes profondeurs de pénétration dans les couches individuelles (2, 3), et une face avant plane (5; 5') du côté de l'incidence des rayons, **caractérisé en ce que** la face avant (5; 5') est inclinée par rapport aux interfaces (6) entre les couches individuelles (2, 3).

2. Miroir selon la revendication 1, **caractérisé en ce que** la face avant inclinée (5; 5') est formée par la face externe d'une couche externe (4') ayant une épaisseur variant de manière linéaire et qui est appliquée, conjointement avec les autres couches individuelles (2, 3), sur un substrat (14) opposé au côté d'incidence des rayons.

3. Miroir selon la revendication 2, **caractérisé en ce que** la couche externe est formée d'une plaquette de verre cunéiforme (4").

4. Miroir selon la revendication 3, **caractérisé en ce que** la plaquette de verre cunéiforme (4") est appliquée, via un fluide d'adaptation d'indice, sur la première couche individuelle (2 ou 3).

5. Miroir selon la revendication 3, **caractérisé en ce que** la plaquette de verre cunéiforme (4") est appliquée à l'aide d'un adhésif optique sur la première couche individuelle (2 ou 3).

6. Miroir selon la revendication 3, **caractérisé en ce que** la plaquette de verre cunéiforme (4") est appliquée, à l'aide d'un ciment optique, sur la première couche individuelle (2 ou 3).

7. Miroir selon la revendication 1, **caractérisé en ce que** la face avant inclinée (5; 5') est formée par la face externe d'un substrat transparent cunéiforme (4), sur la face arrière duquel lés couches (2, 3) sont appliquées (Fig. 1).

8. Miroir selon l'une quelconque des revendications 1 à 7, **caractérisé en ce qu'**on applique, sur la face avant inclinée (5), un revêtement anti-réfléchissant (10) avec une face avant (5') inclinée de manière correspondante.

9. Miroir selon l'une quelconque des revendications 1 à 8, **caractérisé en ce que** les épaisseurs des couches individuelles (2, 3) varient en fonction de la distance au substrat (4; 14) pour obtenir une caractéristique de réflexion prédéterminée et/ou une caractéristique prédéterminée de dispersion du retard de groupe.

10. Miroir selon l'une quelconque des revendications 1 à 9, **caractérisé en ce que** les épaisseurs des couches individuelles (2, 3) augmentent en général avec la distance à la face avant (5; 5') afin de prévoir une dispersion de retard du groupe négative éventuellement constante et un pouvoir de réflexion élevé dans une plage spectrale prédéterminée.

11. Miroir selon l'une quelconque des revendications 1 à 10, **caractérisé en ce qu'**il est prévu, comme couches individuelles (2, 3), en alternance, des couches de SiO₂ et des couches de TiO₂.

12. Miroir selon l'une quelconque des revendications 1 à 10, **caractérisé en ce qu'**il est prévu, comme couches individuelles (2, 3), en alternance, des couches de SiO₂ et des couches de Ta₂O₅.

13. Miroir selon l'une quelconque des revendications 1 à 10, **caractérisé en ce qu'**il est prévu, comme couches individuelles (2, 3), en alternance, des couches semi-conductrices d'un indice de réfraction plus bas et des couches semi-conductrices d'un indice de réfraction plus élevé.

14. Utilisation d'un miroir selon l'une quelconque des revendications 1 à 13 dans un dispositif à laser.

15. Utilisation d'un miroir selon l'une quelconque des revendications 1 à 13 dans un dispositif à laser à impulsions courtes.
